# EUROPEAN PATENT APPLICATION

(11) **EP 1 445 924 A2**
(43) Date of publication of application: **11.08.2004**
(21) Application number: 03023582.4
(22) Date of filing: 16.10.2003
(51) Int. Cl.: H04M 1/73, H04Q 7/32

(54) **Power-save system and method**

(30) Priority: 04.02.2003 KR 2003006796
(71) Applicant: LG ELECTRONICS INC., Seoul (KR)
(72) Inventor: Choi, Ga-Na, Songpa-gu Seoul (KR)
(74) Representative: von Hellfeld, Axel, Dr. Dipl.-Phys.

(57) **Abstract**

A method of saving power in a mobile communication terminal capable of connection to an external device for communicating data is provided. The method comprises connecting an input port of the mobile communication system to an output port of the external device, switching the mobile communication terminal to a first mode, if a predetermined amount of data is not communicated between the input and output ports, detecting whether data is communicated between the input and output ports, while the mobile communication terminal is in the first mode, and switching the mobile communication terminal into a second mode, in response to detecting data communication between the input and the output ports.

## Description

### BACKGROUND OF THE INVENTION

### 1. Field of the Invention

The present invention relates to a mobile telecommunication terminal, and more particularly, to a method and an system for saving power in a mobile telecommunication terminal.

### 2. Description of the Related Art

Generally, a sleep mode for reducing power consumption is set in a mobile telecommunication terminal. When the mobile telecommunication terminal is in the sleep mode, it disables a serial communication module in order to reduce power consumption. If, however, serial data is inputted from an external device through the serial communication module in the sleep mode, the mobile communication terminal cannot recognize the serial data.

For example, when a PC (data terminal equipment, DTE) and the mobile telecommunication terminal (data circuit terminal equipment, DCE) communicate with each other, the PC and the mobile telecommunication terminal transmit data by using a data cable, an infrared ray communication module (IrDA), or blue tooth (BT).

The mobile telecommunication terminal can receive and process data only in a non-sleep mode. That is, the mobile telecommunication terminal can not receive data transmitted through universal asynchronous receiver transmitter (UART) in sleep mode.

Also, in the conventional mobile telecommunication terminal, once the data cable is connected, the non-sleep mode is always maintained in order to receive the data. Accordingly, even in a state that data is not received, consumption power is increased.

Further, in the conventional mobile telecommunication terminal, the non-sleep mode is always maintained when data is received through the IrDA communication module, so that consumption power is increased even in a state that data is not received. For example, the IrDA communication module is enabled in order to receive data from the IrDA communication module of the PC. Thus, consumption power of the mobile telecommunication terminal is increased when the IrDA communication port is enabled.

As the consumption power of the mobile telecommunication terminal increases, effective use time of the mobile telecommunication terminal is decreased.

In the conventional mobile communication terminal, when data is received through the data cable or the IrDA communication module in the non-sleep mode, the non-sleep mode is always maintained even under a state that the data is not received. Thus, consumption power of the mobile telecommunication terminal is increased.

As such, a method and system is needed to minimize the consumption power of the mobile telecommunication terminal, and thereby maximize the effective use/talk time of the mobile telecommunication terminal.

### SUMMARY OF THE INVENTION

In accordance with one or more embodiments, a method for receiving data in a mobile telecommunication terminal is provided. The method comprises converting a mode of the mobile telecommunication terminal into a non-sleep mode when an external device and the mobile telecommunication terminal are connected through a communication unit; converting a mode of the mobile telecommunication terminal into a sleep mode when the data is not received from the external device in the non-sleep mode after a predetermined period; and converting a mode of the mobile telecommunication terminal into a non-sleep mode when the data is received from the external device in the sleep mode.

Converting into the non-sleep mode comprises generating an interrupt signal, if data is received through the communication unit, in the sleep mode; converting the sleep mode into the non-sleep mode in response to the interrupt signal, and receiving the data, and correcting corrupted data, if the received data is corrupted; and processing the corrected data.

In accordance with another embodiments, a mobile communication system comprising a receiving unit for receiving data from an external device; an interrupt module for generating an interrupt in response to receiving the data through an interrupt input port corresponding to a port of the receiving unit; a data detecting unit for generating a conversion signal for converting a mode of the mobile telecommunication terminal into a sleep mode, if a predetermined amount of data is not received from the external device after a first period; and a central processing unit for converting the mode of the mobile telecommunication terminal into the sleep mode to disconnect a power source from a communication module of the mobile telecommunication terminal based on the conversion signal.

The central processing unit converts the mode of the mobile telecommunication terminal into a non-sleep mode. The data detecting unit transmits a conversion signal for converting the mode of the mobile telecommunication terminal into a sleep mode. The conversion signal is transmitted to the central processing unit, if data is not received from the external device in a state that a communication unit of the mobile telecommunication terminal is connected to a communication unit of the external device.

The communication unit of the mobile communication terminal is at least one of a wireless communication module and a wired communication module. The interrupt module enables the interrupt input port when the non-sleep mode is converted into the sleep mode, and disables the interrupt input port when the sleep mode is converted into the non-sleep mode. The central processing unit detects data corruption. The port of the receiving unit and the interrupt input port simultaneously receive the data from the external device.

In accordance with another embodiment, a method of saving power in a mobile communication terminal capable of connection to an external device for communicating data is provided. The method comprises connecting an input port of the mobile communication terminal to an output port of the external device, switching the mobile communication terminal to a first mode, if a predetermined amount of data is not communicated between the input and output ports; detecting whether data is communicated between the input and output ports, while the mobile communication terminal is in the first mode; and switching the mobile communication terminal into a second mode, in response to detecting data communication between the input and the output ports.

The first mode is a sleep mode, the second mode is an non-sleep mode. An interrupt port detects data communication between the input and output ports. The interrupt port transmits an interrupt signal to a processor to switch the mobile communication terminal to the second mode. The interrupt port is disabled when the mobile terminal is switched into the second mode. In some embodiments, the interrupt port is enabled when the mobile terminal is switched into the first mode. The data communicated between the input and output ports is corrected if the processor detects data corruption.

In certain embodiment, a mobile communication terminal comprises means for connecting an input port of the mobile communication system to an output port of the external device, means for switching the mobile communication terminal to a first mode, if a predetermined amount of data is not communicated between the input and output ports; means for detecting whether data is communicated between the input and output ports, while the mobile communication terminal is in the first mode; and means for switching the mobile communication terminal into a second mode, in response to detecting data communication between the input and the output ports.

In yet another embodiment, a mobile communication terminal comprises a processor; an interrupt port; an input port in communication with an output port of an external device; and a data detecting unit for generating a first signal when data is communicated between the input and output ports, while the mobile communication terminal is in a sleep mode, wherein the processor switches the mobile communication terminal from the sleep mode to a non-sleep mode in response to the first signal.

The processor switches the mobile communication terminal from the non-sleep mode back to the sleep mode, if a predetermined amount of data is not communicated between the input and the output ports within a predetermined time period. An interrupt module in communication with the data detecting module produces an interrupt signal to the processor to switch the communication terminal from the sleep mode to non-sleep mode. The interrupt module is disabled when the mobile communication terminal is switched from the sleep mode to the non-sleep mode. The interrupt module is enabled when the mobile communication terminal is switched from the non-sleep mode to the sleep mode.

In one embodiment, a mobile communication system comprises a keypad; a receiving unit for receiving data from an external device; a interrupt module for generating a first signal, in response to user interaction with the keypad; and a central processing unit for converting a mode of the mobile telecommunication terminal into the sleep mode to disconnect a power source from a communication module of the mobile telecommunication terminal based on the first signal.

These and other embodiments of the present invention will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
Figure 1 is a block diagram illustrating various components of a mobile telecommunication terminal, in accordance with one embodiment of the invention; and
Figure 2 is a flow chart of a method for receiving data in a mobile telecommunication terminal, according to one or more embodiments of the present invention.

Features, elements, and aspects of the invention that are referenced by the same numerals in different figures represent the same, equivalent, or similar features, elements, or aspects in accordance with one or more embodiments of the system.

### DETAILED DESCRIPTION OF THE PREFERRED EMBODIMENTS

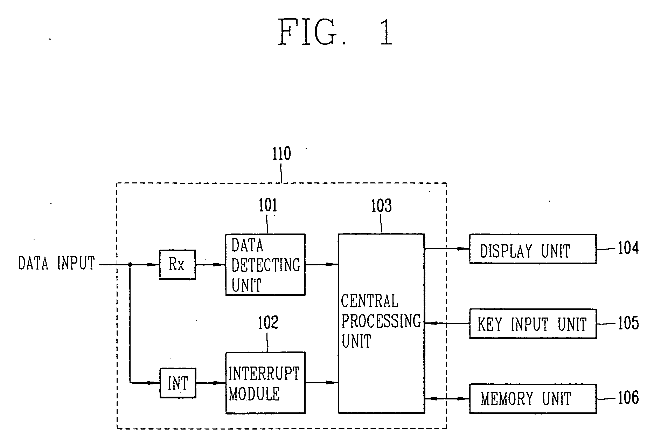

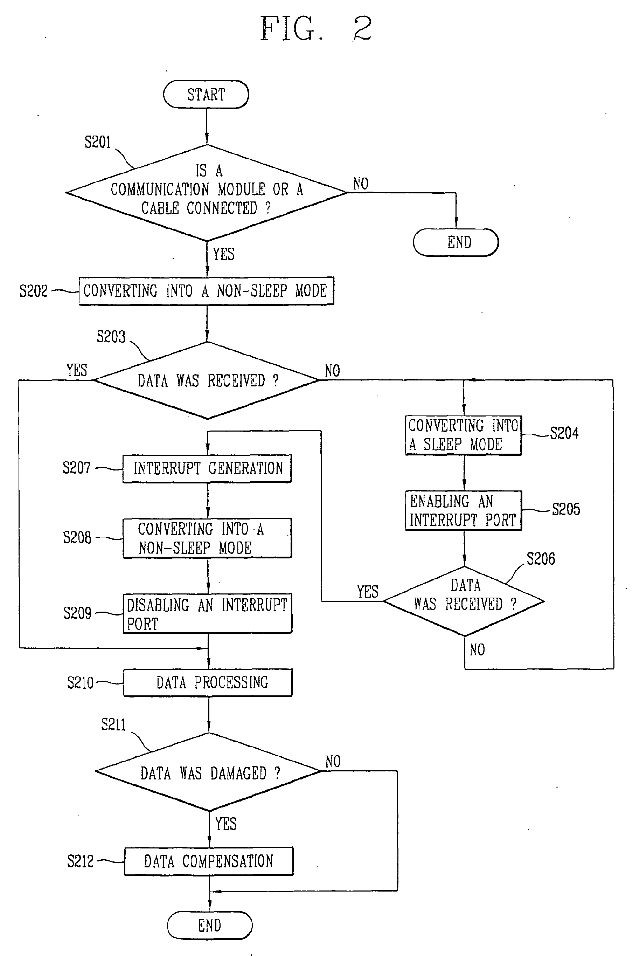

Referring to Figures 1 and 2, a method and system for receiving data in a mobile telecommunication terminal is provided. With reference to one or more embodiments, the mobile communication terminal of the present invention is disclosed as applicable to mobile handset in communication with various external data communication devices. It should be noted, however, that the system and method of the invention can be applied in other environments, such as personal digital assistants (PDA), embedded processing unit, such as set-top-boxes, and other functional or structural equivalents.

In accordance with one embodiment, a mode of the mobile telecommunication terminal is converted into a sleep mode if data is not received from an external device. Ina state that the mobile telecommunication terminal is connected to the external device through a wired (e.g., cable) or a wireless communication (e.g., an infrared communication using IrDA communication module)a mode of the mobile telecommunication terminal is converted into a non-sleep mode, if the data is received.

Referring to Figure 1, the mobile telecommunication terminal according to the present invention comprises a memory unit 106, a key input unit 105, a display unit 104, a receiving unit Rx, an interrupt module 102, a data detecting unit 101, and a central processing unit 103.

Memory unit 106 is for storing each kind of program and reference data. Key input unit 105 comprises a plurality of number keys and function keys for transmitting key data according to a key input. The display unit 104 is for displaying various information of the mobile telecommunication terminal according to the key input. The receiving unit Rx is for receiving data from an external device.

The interrupt module 102 is for generating an interrupt by receiving data from the external device through an interrupt input port (INT), for example, correspondingly connected to, for example, a port of the receiving unit Rx. A data detecting unit 101 is for generating a conversion signal. The conversation signal is provided to convert a mode of the mobile telecommunication terminal into a sleep mode, if data is not received from the external device.

A central processing unit 103 generates a conversion signal for converting a mode of the mobile telecommunication terminal into a sleep mode. In the sleep mode the power applied to a communication module of the mobile telecommunication terminal is terminated based on the conversion signal. The central processing unit 103 also converts a mode of the mobile telecommunication terminal into a non-sleep mode if an interrupt signal is generated from the interrupt module 102.

The sleep mode is a mode for cutting off a power source supplied to the communication module of the mobile telecommunication terminal and thereby reducing power consumption of the mobile telecommunication terminal. In the non-sleep mode the mobile terminal can engage in voice and data communications.

In accordance with one aspect of the invention, a receiving device 110 may comprise a receiving unit Rx for receiving data from the external device and an interrupt module 102. The interrupt module can, for example, generate an interrupt by receiving data from the external device through an interrupt input port (INT) correspondingly connected to a port of the receiving unit Rx.

The receiving device 110 may also comprise a data detecting unit 101 for generating a conversion signal. to the conversion signal converts a mode of the mobile telecommunication terminal into a sleep mode, if data is not received from the external device A central processing unit 103 may be also provided for converting a mode of the mobile telecommunication terminal into a sleep mode.

Referring to Figure 2, the central processing unit 103 determines if the mobile telecommunication terminal is connected to an external device (e.g., a personal computer).

For example, the central processing unit 103 determines whether an IrDA communication module installed at the mobile telecommunication terminal is wirelessly connected to an IrDA communication module installed at a personal computer. In some embodiments, the central processing unit can also determine if an external data cable is connected to the receiving unit Rx of the mobile telecommunication terminal(S201).

If the IrDA communication module of the mobile telecommunication terminal is wirelessly connected to the IrDA communication module of the external device or if the external data cable is connected to the receiving unit Rx, the central processing unit 103 converts a mode of the mobile telecommunication terminal into a non-sleep mode (S202).

If the communication device of the mobile telecommunication terminal is connected to the communication device of the external device, the data detecting unit 101 checks flow of data transmitted from the communication device of the external device real time. That is, the data detecting unit 101 detects data received through the IrDA communication module of the mobile telecommunication terminal or the receiving unit Rx (S203).

Subsequently, the data detecting unit 101 generates a conversion signal if a certain amount of data is received from the communication device of the external device during a predetermined time in the non-sleep mode, and outputs the generated conversion signal to the central processing unit 103. In some embodiments, if no data is received from the communication device the conversion signal is generated.

For example, if data is not received through the data cable or the external communication module in a state that the mobile telecommunication terminal is connected to the data cable or the external communication module in order to receive data, then the data detecting unit 101 outputs a conversion signal for converting a mode of the mobile telecommunication terminal into a sleep mode (S204). In the sleep mode the power source is disconnected from the communication module of the mobile telecommunication terminal.

As such, the central processing unit 103 converts the non-sleep mode into the sleep mode based on the conversion signal. Then the central processing unit 103 outputs a control signal to the interrupt module 102. The interrupt module 102 enables the interrupt input port INT to receive the data according to the control signal of the central processing unit 103 (S205). Herein, since the interrupt input port INT is correspondingly connected to a port of the receiving unit Rx of the mobile telecommunication terminal, if data is transmitted from the external device, the interrupt module 102 is operated.

After the interrupt port is enabled (S250) then it is determined if the data is received via communications with the interrupt input port INT (S206). The interrupt input port INT is connected to the receiving unit Rx , in accordance with one or more embodiments.

The interrupt module 102 generates an interrupt signal, if data is received at the input port Rx (S207).In one embodiment, if the data is received through the receiving unit Rx, the data is simultaneously inputted to the interrupt input port INT correspondingly connected to the receiving unit Rx.

If interrupt is generated by the interrupt module 102, the central processing unit 103 converts the sleep mode into the non-sleep mode (S208). The interrupt module 102 then disables the interrupt input port by the control signal of the central processing unit 103 (S209). That is, since the port of the receiving unit Rx of the mobile telecommunication terminal is correspondingly connected to the interrupt input port INT, interrupt is immediately generated upon receiving data from the external device.

Accordingly, the central processing unit 103 converts a mode of the mobile telecommunication terminal from the sleep mode into the non-sleep mode while the interrupt is generated at first, and then disables the interrupt module 102. Thereby, consumption power can be reduced while data is not received form the external device in a state that the cable is connected to the mobile telecommunication terminal for a long time.

In some embodiments, in response to the interrupt signals, the central processing unit 103 converts the sleep mode into the non-sleep mode to normally receive data and processes the received data (S210).If first data is corrupted, (S211), the corrupted data is detected and/or corrected and then the data is sequentially received. For example, if the data is corrupted, the central processing unit 103 detects and/or corrects the corrupted data.

In one or more embodiments, for example, at the time of transmitting data, first data is transmitted with a command word based on a communication protocol. Accordingly, the corrupted data is retransmitted based communication protocol command settings to correct corrupt data (S212).

In other embodiments, the mobile telecommunication terminal of the present invention can convert a sleep mode into a non-sleep mode by a signal of the key input unit 105. For example, in case that data is not received for a predetermined time after detecting a data cable or an IrDA communication module, a mode of the mobile telecommunication terminal is converted into a sleep mode.

Thereafter, if a user operates the key input unit 105, the mode is converted into a non-sleep mode. That is, if the user presses a key on the key input unit 105 (i.e., during a user's key operation performance) or an operation event of a screen saver is performed, the mobile telecommunication terminal converts the sleep mode into the non-sleep mode to receive data inputted from the external device.

According to the present invention, when the IrDA communication module of the mobile telecommunication terminal is wirelessly connected to the IrDA communication module of the external device or the data cable is connected to the receiving unit of the mobile telecommunication terminal, if data is not received from said external device, a mode of the mobile telecommunication terminal is converted into the sleep mode. If, however, data is received from said external device, a mode of the mobile telecommunication terminal is converted into the non-sleep mode by the user's key operation. According to this, data is normally received and consumption power can be decreased.

As aforementioned, in the method and apparatus for receiving data in the mobile telecommunication terminal according to the present invention, if data is not received from the external device under a state that the mobile telecommunication terminal is connected to the external device through the cable or the IrDA communication module, a mode of the mobile telecommunication terminal is converted into the non-sleep mode thus to reduce consumption power.

The embodiments described above are to be considered in all aspects as illustrative only and not restrictive in any manner. Thus, other exemplary embodiments, system architectures, platforms, and implementations that can support various aspects of the invention may be utilized without departing from the essential characteristics described herein. These and various other adaptations and combinations of features of the embodiments disclosed are within the scope of the invention. The invention is defined by the claims and their full scope of equivalents.

## Claims

1. A method for receiving data in a mobile telecommunication terminal comprising:
converting a mode of the mobile telecommunication terminal into a non-sleep mode when an external device and the mobile telecommunication terminal are connected through a communication unit;
converting a mode of the mobile telecommunication terminal into a sleep mode when the data is not received from the external device in the non-sleep mode after a predetermined period; and
converting a mode of the mobile telecommunication terminal into a non-sleep mode when the data is received from the external device in the sleep mode.

2. The method of claim 1, wherein converting into the non-sleep mode comprises:
generating an interrupt signal, if data is received through the communication unit, in the sleep mode;
converting the sleep mode into the non-sleep mode in response to the interrupt signal, and
receiving the data.

3. The method of claim 2, further comprising:
correcting corrupted data, if the received data is corrupted.

4. The method of claim 3, further comprising:
processing the corrected data.

5. A mobile communication system comprising:
a receiving unit for receiving data from an external device;
an interrupt module for generating an interrupt in response to receiving the data through an interrupt input port corresponding to a port of the receiving unit;
a data detecting unit for generating a conversion signal for converting a mode of the mobile telecommunication terminal into a sleep mode, if a predetermined amount of data is not received from the external device after a first period; and
a central processing unit for converting the mode of the mobile telecommunication terminal into the sleep mode to disconnect a power source from a communication module of the mobile telecommunication terminal based on the conversion signal.

6. The mobile communication system of claim 5, wherein the central processing unit converts the mode of the mobile telecommunication terminal into a non-sleep mode.

7. The mobile communication system of claim 5, wherein the data detecting unit transmits a conversion signal for converting the mode of the mobile telecommunication terminal into a sleep mode.

8. The mobile communication system of claim 7, wherein the conversion signal is transmitted to the central processing unit, if data is not received from the external device in a state that a communication unit of the mobile telecommunication terminal is connected to a communication unit of the external device.

9. The mobile communication system of claim 8, wherein the communication unit of the mobile communication terminal is at least one of a wireless communication module and a wired communication module.

10. The mobile communication system of claim 5, wherein the interrupt module enables the interrupt input port when the non-sleep mode is converted into the sleep mode, and disables the interrupt input port when the sleep mode is converted into the non-sleep mode.

11. The mobile communication system of claim 5, wherein the central processing unit detects data corruption.

12. The mobile communication system of claim 5, wherein the port of the receiving unit and the interrupt input port simultaneously receive the data from the external device.

13. A method of saving power in a mobile communication terminal capable of connection to an external device for communicating data, the method comprising:
connecting an input port of the mobile communication terminal to an output port of the external device,
switching the mobile communication terminal to a first mode, if a predetermined amount of data is not communicated between the input and output ports;
detecting whether data is communicated between the input and output ports, while the mobile communication terminal is in the first mode; and
switching the mobile communication terminal into a second mode, in response to detecting data communication between the input and the output ports.

14. The method of claim 13, wherein the first mode is a sleep mode.

15. The method of claim 13, wherein the second mode is an non-sleep mode.

16. The method of claim 13, wherein an interrupt port detects data communication between the input and output ports.

17. The method of claim 16, wherein the interrupt port transmits an interrupt signal to a processor to switch the mobile communication terminal to the second mode.

18. The method of claim 17, wherein the interrupt port is disabled when the mobile terminal is switched into the second mode.

19. The method of claim 18, wherein the interrupt port is enabled when the mobile terminal is switched into the first mode.

20. The method of claim 19, wherein data communicated between the input and output ports is corrected if the processor detects data corruption.

21. A mobile communication terminal comprising:
means for connecting an input port of the mobile communication system to an output port of the external device.
means for switching the mobile communication terminal to a first mode, if a predetermined amount of data is not communicated between the input and output ports;
means for detecting whether data is communicated between the input and output ports, while the mobile communication terminal is in the first mode; and
means for switching the mobile communication terminal into a second mode, in response to detecting data communication between the input and the output ports.

22. A mobile communication terminal comprising:
a processor;
an interrupt port;
an input port in communication with an output port of an external device; and
a data detecting unit for generating a first signal when data is communicated between the input and output ports, while the mobile communication terminal is in a sleep mode,
wherein the processor switches the mobile communication terminal from the sleep mode to a non-sleep mode in response to the first signal.

23. The mobile communication terminal of claim 22, wherein the processor switches the mobile communication terminal from the non-sleep mode back to the sleep mode, if a predetermined amount of data is not communicated between the input and the output ports within a predetermined time period.

24. The mobile communication terminal of claim 22, further comprising an interrupt module in communication with the data detecting module for producing an interrupt signal to the processor to switch the communication terminal from the sleep mode to non-sleep mode.

25. The mobile communication terminal of claim 24, wherein the interrupt module is disabled when the mobile communication terminal is switched from the sleep mode to the non-sleep mode.

26. The mobile communication terminal of claim 24, wherein the interrupt module is enabled when the mobile communication terminal is switched from the non-sleep mode to the sleep mode.

27. A mobile communication system comprising:
a keypad;
a receiving unit for receiving data from an external device;
a interrupt module for generating a first signal, in response to user interaction with the keypad; and
a central processing unit for converting a mode of the mobile telecommunication terminal into the sleep mode to disconnect a power source from a communication module of the mobile telecommunication terminal based on the first signal.
